(19) Europäisches Patentamt / European Patent Office / Office européen des brevets

(11) **EP 4 036 610 A1**

(12) **EUROPEAN PATENT APPLICATION**

(43) Date of publication:
**03.08.2022 Bulletin 2022/31**

(21) Application number: **21305119.6**

(22) Date of filing: **29.01.2021**

(51) International Patent Classification (IPC):
**$G01V\ 1/38$** (2006.01)

(52) Cooperative Patent Classification (CPC):
**G01V 1/3826;** G01V 2210/1423

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **SERCEL**
**44470 Carquefou (FR)**

(72) Inventor: **VINJE, Vetle**
**91300 MASSY (FR)**

(74) Representative: **Ipsilon**
**Le Centralis**
**63, avenue du Général Leclerc**
**92340 Bourg-la-Reine (FR)**

(54) **METHOD FOR STEERING A VESSEL, RELATED NAVIGATION SYSTEM AND METHOD FOR SEISMIC DATA ACQUISITION**

(57) A method for steering a vessel (6) towing a streamer (7) or a streamer spread. The method comprises acquiring or determining a desired trajectory (PPL) for at least one point (CS7) of the streamer (7) or of the streamer spread; acquiring or determining water current values; modelling a plurality of trajectories for the streamer (7) or the streamer spread according to a plurality of given courses for the vessel and said water current values; determining a target course (T6) for the vessel (6) in function of said plurality of modelled trajectories for the streamer (7) or the streamer spread, and in function of said desired trajectory (PPL) of said at least one point (CS7) of the streamer (7) or of the streamer spread, so that the position (TCS7) of said at least one point (CS7) of the streamer (7) or of the streamer spread, that results from the determined target course (T6) of the vessel (6), follows said desired trajectory (PPL) or follows a trajectory that is included in a predefined width corridor that contains said desired trajectory (PPL); and steering the vessel (6) according to the determined target course (T6). It is also proposed a related computer program, navigation system and method for seismic data acquisition.

FI G.8

EP 4 036 610 A1

**Description**

<u>TECHNICAL FIELD</u>

Embodiments of the subject matter disclosed herein generally relate to marine surveys, in particular to marine seismic surveys.

<u>DISCUSSION OF THE BACKGROUND</u>

It is sought more particularly here below in this document to describe problems existing in the field of seismic data acquisition for oil prospecting industry. The invention of course is not limited to this particular field of application but is of interest for any technique that has to cope with closely related or similar issues and problems.

Seismic data acquisition and processing generate a profile (image) of the geophysical structure (subsurface) under the floor.

While this profile does not provide an accurate location for oil and gas, it suggests, to those trained in the field, the presence or absence of oil and/or gas. Thus, providing a high-resolution image of the subsurface is an ongoing process for the exploration of natural resources, including, among others, oil and/or gas.

To perform a marine seismic acquisition in a survey area, it is common to use seismic sources (like "air guns", "vibratory sources", ...) and seismic sensors.

The sensors are housed in cables, called streamers (or acoustic linear antennas or seismic cables). Several streamers can be used together to form an array of thousands of sensors. In particular, a vessel usually tows a plurality of streamers, or "streamer spread", which can be parallel to each other or have a funnel-type configuration, or any others. The streamers can be towed by one vessel or, according to a well-known "multi-vessel" survey, a plurality of vessels may tow a plurality of streamers.

Similarly, sources are towed by one or several vessels depending on the survey configuration. A same vessel can tow both sources and streamers (i.e. can tow one or several streamers and one or several seismic sources). A survey e.g. can comprise vessels towing only sources, and vessel(s) towing both sources and streamer spread. In particular, the relative position of a source vessel relative to a streamer spread can follow some specificities like for a TopSeis™ acquisition or as disclosed in WO 2020/008259.

To collect the geophysical data in the marine environment, the seismic sources are activated to generate single pulses or continuous sweep of energy.

The signals generated by each source travels through the different layers of the earth crust and the reflected signals are captured by the sensors (such as hydrophones) housed in the streamers. By processing the signals captured by the hydrophones, geophysicists are able to achieve an imaging of the different layers of the earth crust.

A seismic source should shoot at a specified point (also referred to as "shot point"), that is defined by its geographical coordinates (latitude/longitude and/or easting northing). When the vessel reaches a predefined shot point, the seismic source is activated and produces an explosion. The set of shot points of the seismic sources is called "preplot" or "preplot line".

The marine seismic acquisition is controlled and monitored by a navigation system (also referred to as INS, for "Integrated Navigation System"), which is onboard the or each vessel. Each INS of a vessel allows computing position of sensors and seismic sources and driving the vessel along its acquisition path, according to a predetermined desired preplot line, and to activate seismic sources to perform seismic acquisition at desired shot points of the preplot line.

The navigation system also determines the moment of firing a source for each shot point, according to the positions of the various system components. This moment of firing is referred to as "shot time".

The main purpose of an exploration (e.g. offshore oil, or any other natural resources, exploration) over a survey is to cover its underlying area.

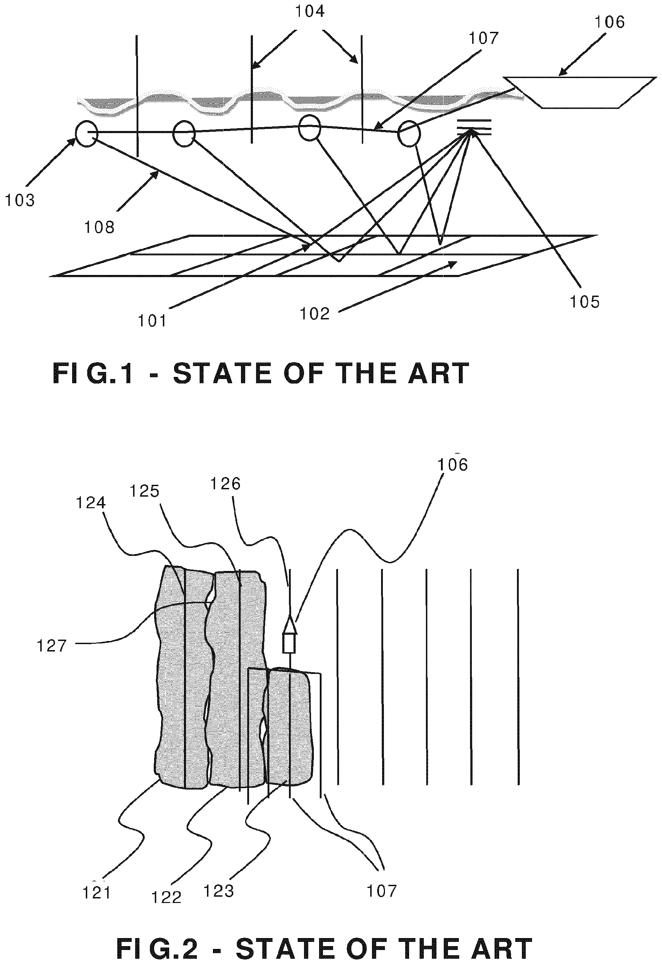

As shown in Figure 1, to ensure this goal is achieved, the area is divided into small areas called bins 102. These bins are virtually located at the bottom of the sea, and the purpose is to hit them through various kinds of reflected waves 108. These waves are captured by the receivers (sensors) 103.

Source-receiver offset classes, also referred to as "offset classes", are illustrated by vertical lines referenced 104, symbolizing the separators between offset classes. A source-receiver offset is an offset distance between source and receiver. Each bin 102 shall be hit enough through these offset classes, according to the client specification, so that the coverage can be considered correct.

In fact, the wave 108 starts from the source 105, and ends at a receiver 103 after bouncing on a reflexion point 101.

Operationally, as shown in Figure 2, the survey is discretized into preplot lines 124, 125, 126, etc. Each preplot line is an arbitrary geometric curve, and can be therefore a straight line, a broken line, a circle, an ellipsoid, or something else that can be mathematically expressed through an equation of the type f(x,y)=0. Those preplot lines are positioned on the survey area in such a way that following all of them with the streamers 107 aligned behind the vessel 106, would result in a perfect global coverage (a part of which corresponds to each of the preplot lines).

In Figure 2, the coverage corresponding to each of the preplot lines referenced 124, 125 and 126 are referenced 121, 122 and 123 respectively.

Getting streamers aligned behind the vessel and following the preplot lines is in practice very difficult.

In practice, the pilot of the vessel tries to steer the vessel to adjust the course of the vessel so that a dedicated part of the streamer spread remains in a corridor, corresponding to the desired coverage, which is defined around the preplot line.

In operation, the line along which the vessel actually sails is called "sail line". The sail line should be the preplot line, but can be different in some cases, e.g. if the vessel must avoid an obstacle located on the preplot line (oil platform, FPSO unit ("floating production, storage and offloading unit"), etc).

For the navigator (human operator), the usual process is to watch a binning software screen that illustrates the coverage provided by the vessel course with reference to the preplot lines, and to adjust the vessel course so as to juxtapose the coverage obtained when trying to follow a preplot line with the coverage obtained when trying to follow adjacent preplot line(s).

This implies that navigators (human operators) must constantly adjust the vessel course by taking the information of the binning software. Doing so manually is suboptimal and is very difficult to achieve even for an experienced user.

Another drawback of the known solution is an excessive steering that often results in a too dynamic line, difficult to mimic in case of a future 4D survey based on the current one.

Documents EP2889645 and US9810802 deal with the positioning of the streamers in marine seismic surveys. It is desirable to propose a method and corresponding system that enables to position the streamers in a more reliable and efficient way.

It is also known from document US 2019/377348 to provide streamers with steering devices, referred to as birds, for adjusting the position of the streamers. However, this solution will cause extra noise in the seismic recordings, can be complex to execute and non-adapted to correct major deviations.

There is thus a need to provide a new method and corresponding navigation system, that enables to overcome at least part of the drawbacks of the known acquisition device.

SUMMARY

According to an embodiment, there is a method for steering a vessel according to Claim 1.

The proposed method enables to take into account the impact of the water current on the streamer or streamer spread for various hypothetic vessel trajectories thanks to the modelling step, and then to determine an appropriate target course for the vessel according to which the vessel is steered.

Thus, the method enables to anticipate and correct important streamer deviations compared to known solutions that are simply based on controlling birds, including major deviations. The proposed method can of course be further associated with other steering devices like birds on the streamer(s), for optimizing the position (trajectory) of the streamer(s).

According to other embodiments, the method can include any features of the subclaims 2 to 11.

It is also proposed a computer program product according to Claim 12. It is also proposed a non-transitory computer-readable carrier medium that stores computing instructions corresponding to said computer program product.

It is also proposed a navigation system according to Claim 13.

It is also proposed a method for seismic data acquisition according to any one of Claims 14 and 15.

According to an optional aspect of the method, the streamer vessel further tows one or a plurality of sources, also referred to as front sources, in front of the streamer or of the streamer spread.

According to an optional aspect of the method, said one or plurality of sources towed by the source vessel, also referred to as top sources, are towed above the streamer or the streamer spread.

It is also proposed a seismic vessel suitable for towing a streamer or a streamer spread, wherein the seismic vessel includes a navigation system as proposed above.

LIST OF FIGURES

The invention is described in more detail below by way of the figures that show embodiments of the invention.

- Figure 1, already discussed in relation to the prior art, illustrates a streamer vessel towing a streamer that comprises sensors adapted to receive acoustic waves emitted from a source and reflected by a subsurface's layer under the sea;
- Figure 2, already discussed in relation to the prior art, illustrates the notions of preplot line and corresponding coverage;
- Figure 3 illustrates, in relation to the prior art, the difficulty to make a given point of a streamer spread follow a desired trajectory such as a preplot line;

- Figure 4 illustrates a vessel according to an embodiment of the invention, that enables a given point of a streamer spread to follow a desired trajectory such as a preplot line;
- Figure 5 illustrates in a 2D terrestrial referential frame x, y, the parameterization of the streamer, seismic vessel and its trajectory according to an embodiment of the invention;
- Figure 6 illustrates examples of forces that apply to a given point of a streamer when towed by a vessel according to an embodiment of the invention;
- Figure 7 illustrates the deviation between the current position of a given point of a streamer spread and the desired trajectory for said point, which deviation is used to compute an object function to be minimized according to an embodiment of the invention;
- Figure 8 illustrates in a 2D terrestrial referential frame x, y, the target course of the vessel that enables the centre point of a streamer to follow a desired preplot line according to an embodiment of the invention, taking into account the water current;
- Figure 9 is a side view of a marine survey system having front and top source sets;
- Figure 10 shows a simplified structure of a navigation system of a vessel according to an embodiment of the invention;
- Figure 11 is a flowchart illustrating steps of method according to an embodiment of the invention.

DESCRIPTION

The following description of the embodiments refers to the accompanying drawings. The same reference numbers in different drawings identify the same or similar elements. The following detailed description does not limit the invention. Instead, the scope of the invention is defined by the appended claims.

Reference throughout the specification to "one embodiment" or "an embodiment" means that a particular feature, structure or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

The specification relates to a technique for steering a seismic vessel. The seismic vessel includes a towing system for towing at least one acoustic linear antenna, hereinafter named streamer. The streamer has the form of a cable that comprises sensors such as hydrophones. The sensors correspond to receivers that receive signals generated by at least one source and reflected by the subsurface layers at reflexion points, as already explained with regard to Figures 1 and 2.

The seismic vessel can tow a plurality of streamers which is referred to as a streamer spread. The streamers can be towed in parallel by the vessel or towed in a form of a funnel or according to another form.

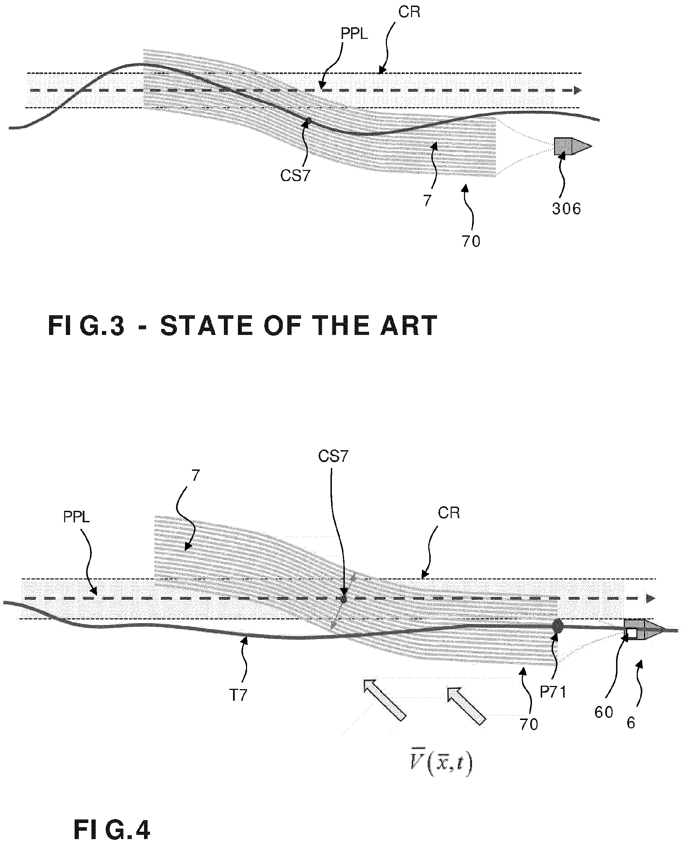

As illustrated at Figure 3, it can be difficult for an operator to steer a vessel 6 so as to maintain a given point CS7 of a streamer 7 or streamer spread 70 superposed to a desired trajectory, such as a preplot line PPL, or even to maintain said point in a corridor CR defined around said desired trajectory, so that deviation appears between the actual position of the point CS7 and the desired trajectory PPL.

As illustrated at Figure 4, considering the desired trajectory PPL that the point CS7 of a streamer 7 or streamer spread 70 should follow during the survey, the proposed technique enables to determine a target course of the vessel so that when the vessel is steered according to said target course, said point CS7 of the streamer 7 follows the desired trajectory PPL. In Figure 4, it is represented the trajectory T7 of point P71 that is the beginning of the streamer 7 attached to the vessel. Said trajectory T7 of point P71 can be assimilated to the one of the vessel.

In the embodiment illustrated at Figure 4, the preplot line PPL corresponds to a line that the centre (mid-length and mid-width) of the streamer or streamer spread should follow during the survey. The description is provided for one preplot line but also applies for a plurality of preplot lines to obtain a desired corresponding bin coverage.

However, the proposed technique also applies to any other desired trajectory. Similarly, in the illustrated embodiments, the point for which a trajectory is desired is the center of the streamer spread. However, the proposed technique also applies to any other point, or group of points, of the streamer spread or of a streamer. The description can thus also apply to one or more points of the streamer spread such as points between two streamers. The invention can apply to one streamer as well as a streamer spread.

The description is provided for one seismic vessel but also applies to a plurality of seismic vessels.

A streamer can be represented as a line of points of length noted L. Each point of the streamer can be defined by its distance along the streamer, noted h, to a given reference point, such as the extremity of the streamer that is on the vessel side, i.e. the beginning of the streamer.

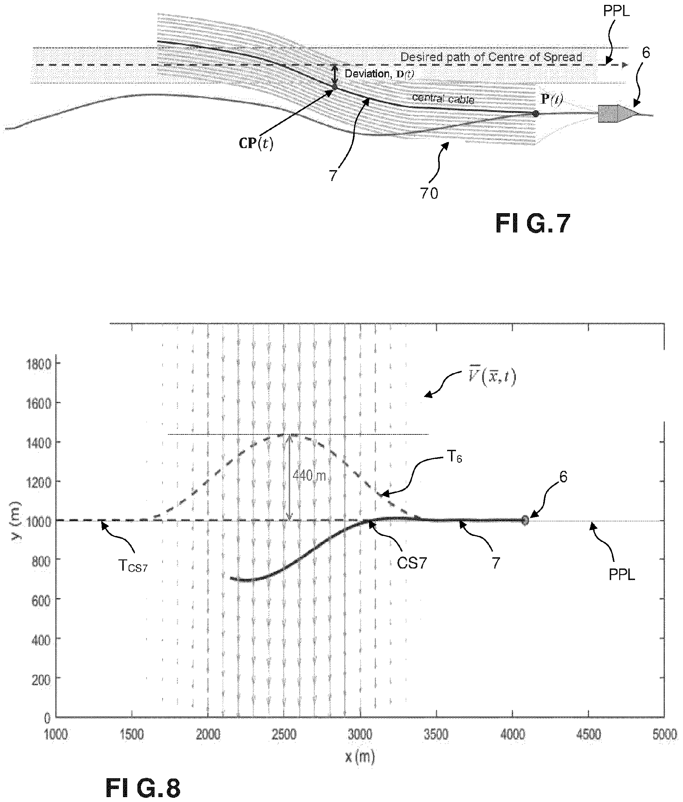

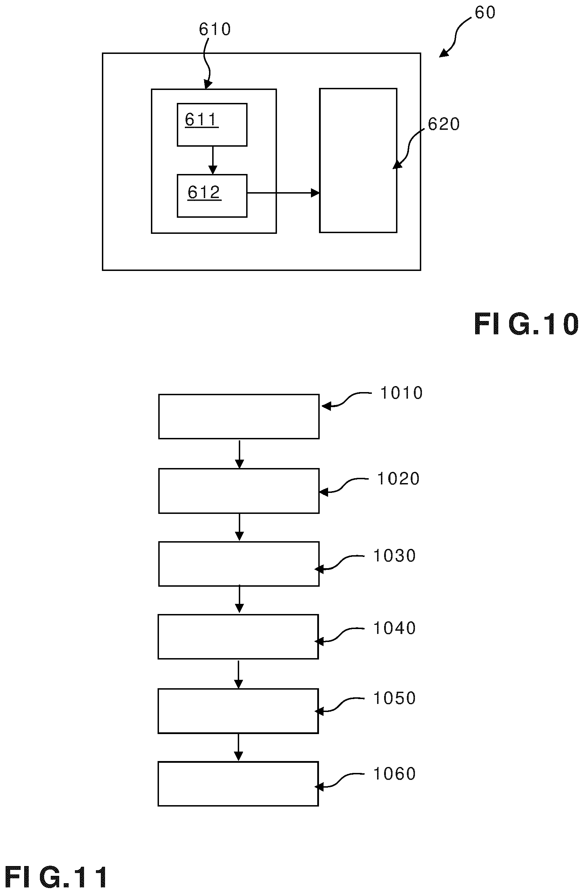

As illustrated at Figure 10, the vessel further includes a navigation system 60 that include a processing unit 610 and a steering unit 620 as detailed hereafter. The steering unit 620 is configured to steer the vessel 6 according to a determined target course T6, as illustrated in the example of Figure 8, so that the vessel course (or sail line) resulting from the steering operation is consistent with the determined target course T6.

### • Desired trajectory

In the illustrated embodiments, the desired trajectory is the trajectory of the midpoint CS7 of the streamer 7 of the streamer spread 70 that follows a straight line corresponding to a preplot line PPL.

As explained above the disclosure also applies to another desired trajectory. In particular the desired trajectory can be any one of the following:

- a streamer or streamer spread trajectory that is compliant with not being closer to an obstacle, such as a platform, than a safety distance, of for instance 500 m, when passing it, but at the same time having the streamer or streamer spread as close as possible to the platform;
- a streamer or streamer spread trajectory that minimizes the curvature of the streamer or streamer spread to avoid tangling of cables;
- a streamer or streamer spread trajectory that minimizes the cross-flow of water across the streamer or streamer spread to reduce the noise;
- a streamer or streamer spread trajectory that minimizes the difference between a desired path and many points along the streamer or streamer spread;
- a streamer or streamer spread trajectory that minimizes the turning time of the seismic vessel and streamer or streamer spread at the end of each preplot line, considered as a current preplot line, and that also assures that the streamer or streamer spread is straight when entering into the next preplot line;
- a streamer or streamer spread trajectory that minimizes the steering such that the traction in the streamer or streamer spread keeps within a minimum and maximum limit.

The desired trajectory can be provided to the navigation system via a user interface.

### • Processing unit

The vessel comprises a processing unit 610 that is configured to acquire or determine water current values. Water current values can comprise values of water current in a zone that includes the desired trajectory PPL and/or values of the water current at a current and/or expected location of the streamer.

The water current can be acquired or determined at current time, and predicted for a given future time, for instance 20-40 minutes after the current time.

The water current can be data that are acquired or determined from an external source such as a marine database that can be accessible by a radio communication device of the processing unit 610.

The processing unit 610 is also configured to take as input the desired trajectory PPL.

The water current and the desired trajectory PPL for said point CS7 of the streamer 7, will thus be used by the processing unit 610 as inputs to determine a target course T6 for the vessel 6. Further inputs can be used to determine a target course T6 for the vessel 6. According to a particular embodiment, a target vessel speed is also determined and associated to the target course T6.

As illustrated in the example of Figure 8, the target course T6 is defined so that when the course (or sail line) of the vessel 6 follows said target course, the position TCS7 of point CS7 of the streamer 7, that results from such a vessel course, follows the desired trajectory PPL or follows a trajectory that is included in a predefined width corridor CR that contains said desired trajectory PPL.

The processing unit 610 includes a streamer modelling system 611.

### • Streamer modelling system

The streamer modelling system 611 is described hereafter in the modelling case of one streamer, but this also applies to the modelling of a streamer spread.

The various modelling of the trajectory of the streamer, i.e. the positions that the points of the streamer take during a given hypothetic vessel course, is used for executing an inversion process, explained further below, that provides the vessel target course.

Note that, since the vessel positions are known from the hypothetic vessel course and that the streamer is attached by its beginning extremity to the vessel, the determination of the streamer shape enables to know the streamer positions (i.e. the positions taken by the points of the streamer all along the given hypothetic vessel course).

The streamer modelling system 611 is configured for modelling the positions that the points of the streamer take, and thus the shape of the streamer, when said streamer is towed in water, in function of a given hypothetic vessel course, preferably along with a given hypothetic vessel speed, and in function of the water current that the streamer is assumed to be exposed during the given hypothetic vessel course.

The modelling is repeated according to various given hypothetic vessel courses to provide various trajectories for the streamer. Preferably, the modelling is iteratively executed by using as inputs the previous given hypothetic vessel course and the deviation between the corresponding previous modelled trajectory for the streamer and the desired trajectory.

The water current vector $\overline{V}(\overline{x},t)$ may vary in both time and space. In the illustrated embodiments and as indicated in Figures 4-6 and 8, the water current vector $\overline{V}(\overline{x},t)$ varies as a function of the position vector $\overline{x}=\langle x,y \rangle$, and of time $t$.

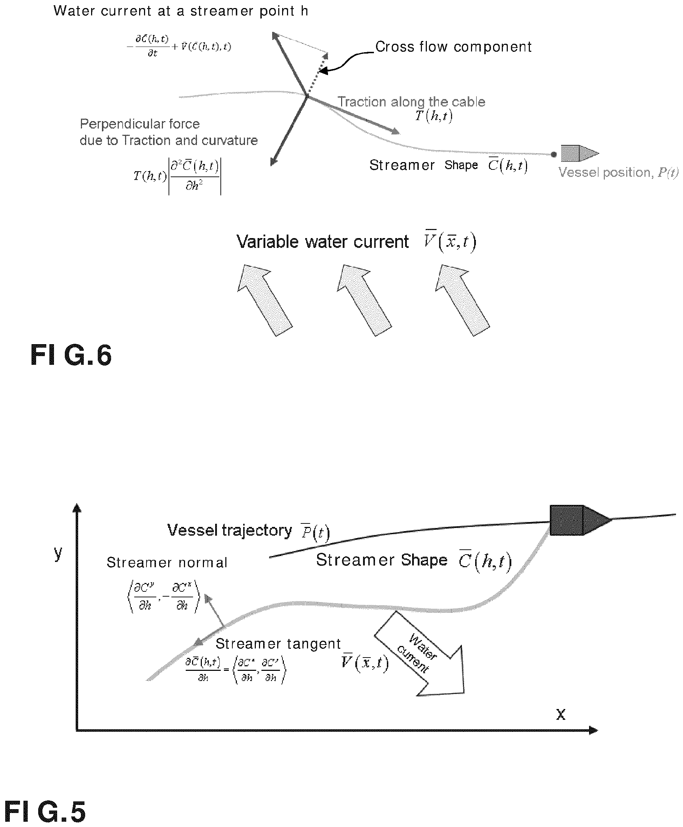

The streamer is considered as a line of points. As illustrated at Figure 5, the streamer can be defined by the vector $\overline{\overline{C}}(h,t)$, $t$ being the time, and $h$ being the distance of a point of the streamer, considered along the streamer, with reference to its extremity attached to the vessel. The trajectory of this extremity is given by $\overline{\overline{P}}(t)$, and we'll have that $\overline{\overline{C}}(h=0,t)=\overline{\overline{P}}(t)$.

Figure 6 illustrates examples of forces that apply to a given point $\overline{C}(h,t)$ of a streamer when towed by a vessel according to an embodiment of the invention.

If the streamer is curved in the point $\overline{C}(h,t)$, the curvature in combination with the traction will create a perpendicular force on the streamer pulling it sideways through the water. This will result in a water current relative to the streamer which is non-parallel to the streamer tangent at the point $\overline{\overline{C}}(h,t)$, so that there exists a cross-flow component as illustrated in Figure 6.

According to particular aspects, the water current $\overline{V}$ is considered to be orthogonal to the tangent of the streamer 7 at said point CS7 of the cable.

In the following embodiments, the modelling of the shape of the streamer is done by using as input a given hypothetic course, $\overline{\overline{P}}(t)$, of the vessel, along with a given hypothetic vessel speed, and the water current associated to this given course of the vessel. The speed and trajectory of the beginning point P71 of the streamer 7 (see Figure 4) can be considered as the vessel speed since the beginning of the streamer can be considered as fixed to the vessel.

It has to be noted that the below terms $\overline{\overline{P}}(t)$, $\overline{C}(h,t)$ and $\overline{V}(\overline{x},t)$ used hereafter are vectors, with x- and y-components $\overline{\overline{P}}(t)=\langle Px,Py \rangle$, $\overline{C}(h,t)=\langle Cx,Cy \rangle$ and $\overline{V}(\overline{x},t)=\langle Vx,Vy \rangle$ in a horizontal plan (x,y), axis y being perpendicular to axis x.

• **Equations according to a particular embodiment**

In a particular embodiment, the shape $\overline{\overline{C}}(h,t)$ of the streamer can be determined by solving the following coupled differential equations:

$$\overline{V}_w\left(h,t\right)\cdot \overline{n} = v_c\left(h,t\right) \qquad\qquad \text{(I)}$$

$$\left|\overline{n}\right| = 1 \qquad\qquad \text{(II)}$$

$$\frac{\partial T(h,t)}{\partial h} = -s_p(h,t)\cdot\left(\overline{V}_w\left(h,t\right)\cdot \overline{p}\right)^2\cdot sign\left(\overline{V}_w\left(h,t\right)\cdot \overline{p}\right) \qquad \text{(III)}$$

In these equations the cross flow $v_c(h,t)$ in equation (I) is given by

$$v_c(h,t) = -\frac{1}{\sqrt{s_c(h,t)}}\sqrt{\left|\left\{T(h,t)+R_{stiff}\right\}\overline{R}\cdot\overline{n}+f_b\right|}\,sign\left\{\left\{T(h,t)+R_{stiff}\right\}\overline{R}\cdot\overline{n}+f_b\right\}$$

$$\overline{V}_w\left(h,t\right) = \left\{-\frac{\partial\overline{C}(h,t)}{\partial t}+\overline{V}\left(\overline{C}\left(h,t\right),t\right)\right\}$$

and                                                                is the water velocity vector relative to a given point $\overline{\overline{C}}(h,t)$ of the

$$\overline{p} = \frac{\partial \overline{C}(h,t)}{\partial h} = \left\langle \frac{\partial C^x}{\partial h}, \frac{\partial C^y}{\partial h} \right\rangle \qquad \overline{n} = \left\langle \frac{\partial C^y}{\partial h}, -\frac{\partial C^x}{\partial h} \right\rangle$$

streamer while                                          and                                          are the unit tangent and perpendic-

$$\overline{R} = \frac{\partial^2 \overline{C}(h,t)}{\partial h^2}$$

ular vectors to the streamer, respectively and                                          is the streamer curvature.

The traction $T(h,t)$ in the streamer is given in equation (III), while the physical friction/resistance factors parallel and perpendicular to the streamer is given by $s_p(h,t)$ and $s_c(h,t)$, respectively.

$R_{stiff}$ is a factor related to the stiffness of the streamer; and

$f_b(h,t)$ is the force due to steering device(s), referred to as bird(s), along vector $\overline{n}$, when the streamer is provided with bird(s):

Equations (I), (II) and (III) can be solved numerically for the unknown streamer shape, $\overline{C}(h,t) = \langle C^x(h,t), C^y(h,t)\rangle$ and traction $T(h,t)$.

Using a discretization with $i$ and $j$ being the indexes of the distance $h$ and time $t$ we have the following representations for streamer shape and traction:

$$\overline{C}(h,t) = \left\langle C^x_{i,j}, C^y_{i,j} \right\rangle \text{ and } T(h,t) = T_{i,j}$$

For instance,

$$\overline{C}(h = 0, t = 0) = \left\langle C^x_{1,1}, C^y_{1,1} \right\rangle$$

$$\overline{C}(h = \Delta h, t = 0) = \left\langle C^x_{2,1}, C^y_{2,1} \right\rangle$$

$\Delta h$ is increment in sampling of $h$ etc

Equations can be solved by using these discrete quantities and finite difference approximations of differentials. For example, the following approximations can be used for the x component of the streamer speed and streamer tangent respectively:

$$\frac{\partial C^x_{i,j}}{\partial t} \approx \frac{-C^x_{i,j} + C^x_{i,j+1}}{\Delta t} \qquad , \qquad \frac{\partial C^x_{i,j}}{\partial h} \approx \frac{-C^x_{i-1,j} + C^x_{i,j}}{\Delta h}$$

Other methods can also be used to solve the equations.

Further parameter(s) can be taken into account to model the shape of the streamer. According to preferred embodiments, physical properties of the streamer 7 related to its interaction with the water can be used as further inputs to enhance the modelling. Physical properties of the streamer can include at least one of the following: stiffness of the streamer, resistance of the streamer to side slip through the water (the $s_c$ parameter mentioned above), resistance to parallel slip (the $s_p$ parameter mentioned above), force of one or more steering devices attached to the streamer, and/or force of tail buoy(s) attached to the streamer.

• **Inversion scheme**

The processing unit 610 includes an inversion system 612 configured to apply an inversion scheme to determine the target course T6 for the vessel 6.

The inversion system 612 takes as input various modelled trajectories of the streamer that result from various given hypothetic courses of the vessel, with associated vessel speed, that have been considered by the modelling system.

The inversion system 612 is configured to determine among the various modelled trajectories of the extreme front of the streamer the one that corresponds to the desired property or position of the whole, or parts, of the streamer.

The inversion scheme thus enables to find an optimum vessel course.

According to a particular embodiment, an object function $Obj\{\overline{P}(t)\}$ is defined, which is a function of the trajectory of the streamer extremity attached to the vessel, given by the vector $\overline{\overline{P}}(t)$ where $t$ is time.

With reference to Figure 7, it is provided an example of how to define an object function.

To find the trajectory $\overline{P}(t)$ of the attachment point of the streamer 7 that enables to have the centre of the streamer spread 70 on a pre-defined desired path, the object function $Obj\{P(t)\}$ is defined as

$$Obj\{P(t)\} \equiv \int_{0}^{T} D(t)^2 \, dt$$

where

$\underline{D}(t)$ is the perpendicular distance from the centre of spread $\mathbf{CP}(t)$ to the desired trajectory for the centre of spread and $\overline{P}(t)$ is the trajectory of the beginning point of the streamer 7 in the streamer spread 70

As explained above, the streamer modelling system computes the object function $Obj\{P(t)\}$ for a plurality of trajectories $P(t)$.

The inversion consists in finding a specific $\overline{\overline{P}}(t)$ which minimizes $Obj\{\overline{\overline{P}}(t)\}$. In other words, of all possible values of the trajectory $\overline{P}(t)$, the inversion consists in finding the one, $\overline{P}_0(t)$, which minimizes the object function $Obj\{\overline{P}(t)\}$:

$$Min[Obj\{\overline{P}(t)\}] = Obj\{\overline{P}_0(t)$$

Finding a specific $\overline{\overline{P}}(t)$ which minimizes $Obj\{\overline{\overline{P}}(t)\}$ can be obtained by scanning a large number (systematically or randomly) of possible versions of $\overline{P}(t)$'s and choose the one, $\overline{P}_0(t)$, giving the minimum objective function, and thus the desired streamer property or properties. However, such embodiment can be very time-consuming.

According to a particular embodiment, the inversion is based on a steepest descent method. The steepest descent method can be executed by initially defining a first initial vessel course (path) and corresponding initial speed, corresponding to a guess of the vessel course and speed, and by comparing the resulting modelled position (trajectory) of the streamer with the desired trajectory for the streamer. This first initial vessel course and/ or initial speed is adjusted iteratively to minimize the misfit (difference) between the desired trajectory for the streamer and the modelled trajectory for the streamer obtained as a result of the vessel course.

Information related to the steepest descent method can be found in Chapter 3 in "Steepest-Descent Method" of the document entitled "Seismic Inversion" from Dr. Gerard T. Schuster, published on January 1st 2017 by Society of Exploration Geophysicists, for instance available at https://library.seg.org/doi/10.1190/1.9781560803423.ch3.

Alternatively, newton's method can be used.

The above-described functions and steps related to the operations of modelling, inversion and steering may be implemented in the form of a computer program or via hardware components (e.g. programmable gate arrays). In particular, the functions and the steps performed by the modelling system, the inversion system and the steering system may be performed by sets of computer instructions or modules implemented by a processor or a controller or they may be performed by dedicated electronic components of the field-programmable gate array (FPGA) or application-specific integrated circuit (ASIC) type. It is also possible to combine computer parts and electronic parts.

The computer programs, or computer instructions, may be contained in program storage devices, e.g. computer-readable digital data storage media, or executable programs. The programs or instructions may also be executed from program storage peripherals.

According to an embodiment, and as illustrated at FIG. 10, the navigation system 60 can comprise the processing unit 610 equipped for example with a microprocessor, and driven by a computer program implementing the steps of the method for determining a target trajectory T6 for the vessel as described herein. The processing unit 610 can take as inputs the desired trajectory for at least one point of the streamer or streamer spread, hypothetic given vessel courses and corresponding vessel speed, and the water current in the navigation area of the vessel. The modelling system 611 and the inversion system 612 can be part of the computer program. The determined target trajectory T6 outputted by the inversion system 612 can then be communicated to the steering system 620.

• **Example of a steering method**

With reference to Figures 8 and 11, an example of a method for steering a vessel 6 is proposed below. Some of the steps can be executed in different order or in parallel when appropriate.

As explained above, the method is applied to a point CS7 of the streamer that is the middle of the streamer 7 or streamer spread 70, but the method can be applied to another point of the streamer or streamer spread, and for another desired trajectory that the preplot line PPL or to a plurality of preplot lines.

At step 1010, the trajectory which is desired for point CS7 of the streamer is acquired or determined (for instance by computing data) by the processing unit. The trajectory can be defined for instance by an operator on a user interface of the navigation system. The desired trajectory which is defined is the preplot line PPL.

At step 1020, the water current is acquired by the processing unit for a given range of time and with regard to the expected navigation zone. In the illustrated example of Figure 8, the water current $\overline{V}(\overline{x},t)$ is perpendicular to the preplot line PPL, the preplot line PPL being parallel to the axis x.

At step 1030, the modelling system 611 of the processing unit 610 models streamer trajectories with regard to hypothetic given vessel courses. In particular, the modelling system 611 models the streamer shape, i.e. positions taken by points of the streamer, during given hypothetic vessel courses and associated hypothetic speed values.

The trajectory of the streamer can be modelled based on the determined shape of the streamer and on the position and speed of the beginning of the streamer attached to the vessel, that can be derived from the speed and given course of the vessel.

The modelling can start with an initial guess for the given vessel course which is modified (perturbed) for the next modelling so as to generate next given vessel courses that differ from the previous ones.

Various streamer trajectories are thus modelled, resulting from as many different given vessel course, and associated speed, in order to choose the vessel course giving the optimum streamer properties correspond here to the following of the preplot line PPL by point CS7 of the streamer.

At step 1040, the inversion system 612 of the processing unit 6100 proceeds to an inversion process by determining among the modelled streamer trajectories, the one that provides a trajectory for point CS7 that is the closest to the desired trajectory PPL.

The processing unit 610 thus determines as the target vessel source T6 and associated target speed value, the given hypothetic vessel course and associated hypothetic speed value that has been used to model the determined streamer trajectory that is the closest to the desired trajectory for point CS7.

The vessel course used as input for the modelling can be modified until the resulting modelled streamer position is close enough to the desired properties.

At step 1050, the processing unit 610 provides the determined target vessel course T6 to the steering device 620 so that at step 1060 the steering device 620 steers the vessel to correct the current vessel course according to the target T6 vessel course.

The proposed navigation system and corresponding method thus enables to find an optimum course for the vessel, by using many possible trajectories (courses) for the vessel to model many versions of streamer trajectories and then to choose the vessel course that gives the streamer trajectory that is the closest to one or several of the desired properties mentioned above.

The target vessel source T6 can be updated regularly as the streamer vessel moves along the sail line.

In particular, the present invention allows to take the maximum of the TopSeis™ acquisition advantages, by optimizing the relative position of the source above the streamer spread, thereby enhancing the quality of the resulting data.

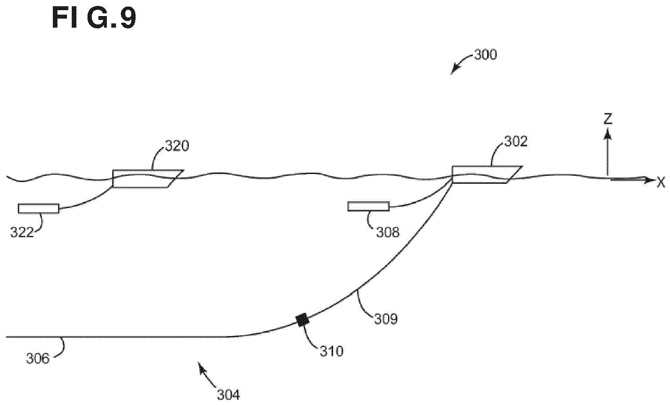

An example of a TopSeis™ configuration 300 is illustrated in Figure 9. The TopSeis™ configuration 300 includes a streamer vessel 302 that tows a streamer spread 304, the streamer spread 304 including a given number of streamers 306, and a source vessel 320 that tows plural sources 322 over the streamer spread. These sources are called herein top sources because they are located above (along a vertical direction Z) the streamer spread.

The streamer vessel 302 also tows plural sources 308, which are called herein front sources because these sources are located in front (along the inline direction X) of the streamer spread 304. Note that Figure 9 shows the streamer spread 304 being connected at point 310 to the streamer vessel 302 by towlines 309, which are not part of the streamer spread.

Thus, the front sources 308 are not directly above (along the vertical Z direction) the streamer spread 304. In one embodiment, the streamer vessel 302 may be configured to tow both the front sources 308 and the top sources 322. In other word, although Figure 9 shows two vessels towing the two sets of sources, in one application it is possible to tow all the sources, front and top, with the streamer vessel 302. In another application, it is possible to tow the front sources with the streamer vessel 302 and to have the top sources independently carried by their own carrier, e.g., small boat, autonomous underwater vehicle (AUV), etc.

According to embodiments, the front sources 308 are aligned (centered) with the sail line of the vessel (i.e the vessel course), preferably in the middle of the beginning of the streamer spread. The top sources 320 are preferably offset along a cross line direction from the front sources 308.

According to a particular embodiment it is proposed a method for seismic data acquisition with such a TopSeis™ configuration 300. The streamer spread positions are modelled as proposed above taking into account the water current, and the inversion process is executed, as proposed above, using the modelled positions of the streamer spread, to determine the vessel course that leads to the desired property for the streamer spread. According to embodiments such desired property can be that a dedicated part or point of the streamer spread remains on a preplot line or in a corridor, corresponding to the desired coverage, which is defined around the preplot line. The dedicated part of the streamer spread can be a point positioned at the centre of the streamer spread (that point can be a point on a streamer or a point between two streamers). Then the streamer vessel 302 is steered according to the determined vessel course that is considered as a target vessel course.

The present invention can be applied notably to the oil exploration industry, but may also be applied to any field using a geophysical data acquisition network in a marine environment. It may also be use in any situation when a streamer, or any cable, is pulled through the water, also not for acquiring geophysical data.

The present invention can also be applied for having the desired trajectory defined through:

- the compliance of the streamer or streamer spread trajectory with a minimal distance relative to an obstacle, such as a platform, being a safety distance, of for instance 500 m, when passing it, the streamer or streamer spread being as close as possible to the platform;
- the minimization of the curvature of each cable;
- the minimization of the cross-flow of water across the streamer or streamer spread to reduce the noise;
- the minimization of the difference between a desired path and many points along the streamer or streamer spread;
- the minimization of the turning time (at the end of each preplot line) of the seismic vessel towing the streamer or streamer spread, the streamer or streamer spread remaining straight when entering into the next preplot line;
- the minimization of the steering such that the traction in the streamer or streamer spread keeps within a minimum and maximum limit.

Although the features and elements of the present exemplary embodiments are described in the embodiments in particular combinations, each feature or element can be used alone without the other features and elements of the embodiments or in various combinations with or without other features and elements disclosed herein.

**Claims**

1. Method for steering a vessel (6), the vessel (6) towing a streamer (7) or a plurality of streamers, referred to as a streamer spread,
   wherein the method comprises:

   - acquiring or determining a desired trajectory (PPL) for at least one point (CS7) of the streamer (7) or of the streamer spread (70);
   - acquiring or determining water current values;
   - modelling a plurality of trajectories for the streamer (7) or the streamer spread according to a plurality of given courses for the vessel and said water current values;
   - determining a target course (T6) for the vessel (6) in function of said plurality of modelled trajectories for the streamer (7) or the streamer spread, and in function of said desired trajectory (PPL) of said at least one point (CS7) of the streamer (7) or of the streamer spread,
   so that the position ($T_{CS7}$) of said at least one point (CS7) of the streamer (7) or of the streamer spread (70), that results from the determined target course (T6) of the vessel (6), follows said desired trajectory (PPL) or follows a trajectory that is included in a predefined width corridor (CR) that contains said desired trajectory (PPL); and
   - steering the vessel (6) according to the determined target course (T6).

2. The method of Claim 1, wherein said desired trajectory (PPL) is a preplot line.

3. The method of Claim 1 or 2, wherein said at least one point (CS7) is a point positioned at the centre of the streamer (7) or of the streamer spread.

4. The method of any one of Claims 1 to 3, wherein each of the plurality of trajectories for the streamer (7) or the streamer, is modelled also in function of a given vessel speed associated to the corresponding given course for the vessel.

5. The method of any one of Claims 1 to 4, wherein the plurality of given courses for the vessel is obtained by :

   - starting the modelling with a first given course for the vessel to model a corresponding trajectory for the streamer (7) or the streamer spread, and

- generating each next given course for the vessel in function of a deviation between the desired trajectory for said at least one point (CS7) of the streamer (7) or of the streamer spread, and the previously modelled trajectories for the streamer (7) or the streamer spread obtained according to the previous given course for the vessel.

6. The method of any one of Claims 1 to 5, wherein determining the target course (T6) for the vessel (6) comprises the step of applying an inversion process, that uses as inputs the plurality of the modelled trajectories of the streamer or streamer spread, to determine said target course (T6) for the vessel (6).

7. The method of Claim 6, wherein the inversion process comprises the determination among the plurality of the modelled trajectories of the streamer or streamer spread, of the one that is the closest with the desired trajectory for said at least one point (CS7) of the streamer (7) or of the streamer spread.

8. The method of Claim 7, wherein said determination step in the inversion process is obtained by executing a steepest descent method applied to the modelled trajectories of the streamer or streamer spread with regard to the desired trajectory for said at least one point (CS7) of the streamer (7) or of the streamer spread.

9. The method of any one of Claims 1 to 8, wherein modelling a trajectory of the streamer (7) or of the streamer spread includes modelling a shape $\overline{\overline{C}}$ of the streamer (7) or streamer spread that moves when being towed by the vessel through the water, said modelling of the shape $\overline{\overline{C}}$ being based on:

- a given trajectory $\overline{\overline{P}}$ of the beginning point of the streamer (7) or of the streamer spread, and associated given speed of said beginning point; and
- the water current $\overline{V}$ at the corresponding location of the streamer (7) or of the streamer spread.

10. The method of Claim 9, wherein said step of modelling the shape $\overline{\overline{C}}$ of the streamer (7) or streamer spread, is also based on at least one of the following parameters:

- a force exerted by steering device(s) and/or tail buoy(s) on the streamer or the streamer spread;
- a stiffness of the streamer or of the streamer spread;
- a traction force to which is subjected the streamer or the streamer spread; and
- a side slip value to which is subjected the streamer or the streamer spread.

11. The method according to Claim 9 or Claim 10, wherein the shape $\overline{\overline{C}}$ of the streamer or streamer spread that moves when being towed by the vessel through the water, is determined by solving the equations:

$$\overline{V}_w\left(h,t\right)\cdot \overline{n} = v_c(h,t) \tag{I}$$

$$|\overline{n}| = 1 \tag{II}$$

$$\frac{\partial T(h,t)}{\partial h} = -s_p(h,t)\cdot \left(\overline{V}_w\left(h,t\right)\cdot \overline{p}\right)^2 \cdot sign\left(\overline{V}_w\left(h,t\right)\cdot \overline{p}\right) \tag{III}$$

wherein

$t$ is the time, and $h$ is the distance of a point of the streamer or streamer spread, considered along the streamer or streamer spread, with reference to its extremity attached to the vessel;
the cross flow $v_c(h,t)$ in equation (I) is given by

$$v_c = -\frac{1}{\sqrt{s_c(h,t)}}\sqrt{\left|\left\{T(h,t)+R_{stiff}\right\}\overline{R}\cdot \overline{n} + f_b\right|} sign\left\{\left\{T(h,t)+R_{stiff}\right\}\overline{R}\cdot \overline{n} + f_b\right\}$$

the water velocity vector relative to a given point $\overline{\overline{C}}(h,t)$ of the streamer or streamer spread is given by

$$\overline{V}_w\left(h,t\right)=\left\{-\frac{\partial\overline{C}\left(h,t\right)}{\partial t}+\overline{V}\left(\overline{C}\left(h,t\right),t\right)\right\} \qquad \overline{p}=\frac{\partial\overline{C}\left(h,t\right)}{\partial h}=\left\langle\frac{\partial C^x}{\partial h},\frac{\partial C^y}{\partial h}\right\rangle$$

and

$$\overline{n}=\left\langle\frac{\partial C^y}{\partial h},-\frac{\partial C^x}{\partial h}\right\rangle$$

are the unit tangent and perpendicular vectors to the streamer or streamer spread,

$$\overline{R}=\frac{\partial^2\overline{C}\left(h,t\right)}{\partial h^2}$$

respectively, in a horizontal plan (x,y), axis y being perpendicular to axis x; is the streamer or streamer spread curvature;

$T(h,t)$ is the traction in the streamer or streamer spread;

$s_p(h,t)$ and $s_c(h,t)$ are respectively the physical friction/resistance factors parallel and perpendicular to the streamer or streamer spread;

$R_{stiff}$ is a factor related to the stiffness of the streamer or streamer spread; and $f_b(h,t)$ is the force due to steering device(s), referred to as bird(s), along vector $\overline{n}$, when the streamer or streamer spread is provided with bird(s):

12. Computer program product that comprises program code instructions for implementing the method according to any one of the Claims 1 to 11, when said program is executed on one or more computer(s) or processor(s) of a navigation system (60) of a vessel (6).

13. Navigation system (60) for steering a vessel (6) towing a streamer or a streamer spread in water, wherein the navigation system (60) is configured for executing the steps of a method according to any one of Claims 1 to 11.

14. Method for seismic data acquisition with a streamer vessel (302) towing a streamer or a streamer spread (304), and with a source vessel (320) towing one or a plurality of sources (322), the source vessel (320) being distinct from the streamer vessel (302) or being formed by the streamer vessel (302);
wherein the method includes applying the steering method of any one of Claims 1 to 11 to the streamer vessel (302) and the streamer or streamer spread (304), to determine a target course for the streamer vessel (302) and to steer the streamer vessel (302) according to the target course.

15. Method for seismic data acquisition according to claim 14, wherein sources (322) are towed above a point (CS7) of the streamer or streamer spread (304) and the target course for the streamer vessel (302) is determined so that the sources (322) remain on top of said at least one point (CS7) of the streamer (7) or of the streamer spread.

**FIG.1 - STATE OF THE ART**

**FIG.2 - STATE OF THE ART**

CR

PPL

CS7

7

306

70

# FIG.3 - STATE OF THE ART

CS7

7

CR

PPL

T7

$\overline{V}(\overline{x},t)$

P71

70

60  6

# FIG.4

Water current at a streamer point h

$-\dfrac{\partial \tilde{C}(h,t)}{\partial t}+\tilde{V}(\tilde{C}(h,t),t)$

Cross flow component

Traction along the cable
$T(h,t)$

Perpendicular force
due to Traction and curvature

$T(h,t)\left|\dfrac{\partial^{2}\overline{C}(h,t)}{\partial h^{2}}\right|$

Streamer Shape $\overline{C}(h,t)$

Vessel position, $P(t)$

Variable water current $\overline{V}(\overline{x},t)$

## FIG.6

y

Vessel trajectory $\overline{P}(t)$

Streamer normal

$\left\langle \dfrac{\partial C^{y}}{\partial h},-\dfrac{\partial C^{x}}{\partial h}\right\rangle$

Streamer Shape $\overline{C}(h,t)$

Streamer tangent

$\dfrac{\partial \overline{C}(h,t)}{\partial h}=\left\langle \dfrac{\partial C^{x}}{\partial h},\dfrac{\partial C^{y}}{\partial h}\right\rangle$

$\overline{V}(\overline{x},t)$

Water current

x

## FIG.5

**FIG.7**

**FIG.8**

# FI G.9

610

60

611

612

620

**FIG.10**

1010

1020

1030

1040

1050

1060

**FIG.11**

Europäisches
Patentamt
European
Patent Office
Office européen
des brevets

# EUROPEAN SEARCH REPORT

**Application Number**

EP 21 30 5119

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/064526 A1 (HOLO ANDREAS T [NO]) 22 March 2007 (2007-03-22) | 1-5,9-15 | INV. G01V1/38 |
| Y | * paragraphs [0007], [0012], [0042] - [0043], [0045] - [0046]; claims 1, 3-4, 16; figure 1 * | 6-8 | |
| | ----- | | |
| X | US 2015/016218 A1 (WELKER KENNETH [NO] ET AL) 15 January 2015 (2015-01-15) | 1-5,9-15 | |
| Y | * paragraphs [0041], [0045] - [0048], [0059], [0075], [0077], [0094] - [0095], [0151], [0181]; figures 1-13 * | 6-8 | |
| | ----- | | |
| Y | US 2019/235117 A1 (GODØY ERIK [NO] ET AL) 1 August 2019 (2019-08-01) * paragraphs [0065], [0066] * | 6-8 | |
| | ----- | | |
| A | US 2011/002193 A1 (STORTEIG ESKILD [NO] ET AL) 6 January 2011 (2011-01-06) * paragraphs [0008] - [0010], [0055], [0064], [0071]; figures 1-12 * | 1-15 | |
| | ----- | | **TECHNICAL FIELDS SEARCHED (IPC)**<br><br>G01V |

The present search report has been drawn up for all claims

| Place of search | Date of completion of the search | Examiner |
|---|---|---|
| The Hague | 30 June 2021 | Naujoks, Marco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 30 5119

This annex lists the patent family members relating to the patent documents cited in the above-mentioned European search report.
The members are as contained in the European Patent Office EDP file on
The European Patent Office is in no way liable for these particulars which are merely given for the purpose of information.

30-06-2021

| Patent document cited in search report | | Publication date | Patent family member(s) | | | Publication date |
|---|---|---|---|---|---|---|
| US 2007064526 | A1 | 22-03-2007 | AU | 2006203075 | A1 | 15-03-2007 |
| | | | FR | 2890179 | A1 | 02-03-2007 |
| | | | GB | 2429541 | A | 28-02-2007 |
| | | | NO | 336405 | B1 | 17-08-2015 |
| | | | US | 2007064526 | A1 | 22-03-2007 |
| US 2015016218 | A1 | 15-01-2015 | AU | 2004317795 | A1 | 13-10-2005 |
| | | | AU | 2008212003 | A1 | 25-09-2008 |
| | | | AU | 2009202642 | A1 | 23-07-2009 |
| | | | BR | PI0418590 | A | 31-07-2007 |
| | | | CN | 1947032 | A | 11-04-2007 |
| | | | EP | 1735641 | A1 | 27-12-2006 |
| | | | EP | 2280294 | A2 | 02-02-2011 |
| | | | EP | 2793059 | A2 | 22-10-2014 |
| | | | NO | 338091 | B1 | 25-07-2016 |
| | | | NO | 339120 | B1 | 14-11-2016 |
| | | | NO | 339123 | B1 | 14-11-2016 |
| | | | US | 2009141587 | A1 | 04-06-2009 |
| | | | US | 2015016218 | A1 | 15-01-2015 |
| | | | WO | 2005096018 | A1 | 13-10-2005 |
| US 2019235117 | A1 | 01-08-2019 | AU | 2017346322 | A1 | 02-05-2019 |
| | | | BR | 112019004084 | A2 | 28-05-2019 |
| | | | CA | 3034521 | A1 | 26-04-2018 |
| | | | GB | 2567386 | A | 10-04-2019 |
| | | | NO | 342823 | B1 | 13-08-2018 |
| | | | RU | 2019113513 | A | 24-11-2020 |
| | | | US | 2019235117 | A1 | 01-08-2019 |
| | | | WO | 2018074932 | A1 | 26-04-2018 |
| US 2011002193 | A1 | 06-01-2011 | AU | 2007201234 | A1 | 11-10-2007 |
| | | | GB | 2436456 | A | 26-09-2007 |
| | | | US | 2007223307 | A1 | 27-09-2007 |
| | | | US | 2011002193 | A1 | 06-01-2011 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020008259 A
- EP 2889645 A
- US 9810802 B
- US 2019377348 A

**Non-patent literature cited in the description**

- **DR. GERARD T. SCHUSTER.** Steepest-Descent Method" of the document entitled "Seismic Inversion. *Society of Exploration Geophysicists,* 01 January 2017